# EUROPEAN PATENT SPECIFICATION

(11) **EP 3 748 969 B1**
(45) Date of publication and mention of the grant of the patent: **03.01.2024**
(21) Application number: 20187196.9
(22) Date of filing: 24.09.2013
(51) Int. Cl.: H04N 19/33, H04N 19/46, H04N 19/61, H04N 19/70, H04N 19/187, H04N 19/12, H04N 19/85, H04N 19/40, H04N 19/59

(54) **INTER-LAYER REFERENCE PICTURE PROCESSING FOR CODING STANDARD SCALABILITY**
ZWISCHENSCHICHTREFERENZBILDVERARBEITUNG ZUR CODIERUNG EINER STANDARDSKALIERBARKEIT
TRAITEMENT D'IMAGES DE RÉFÉRENCE INTERCOUCHE PERMETTANT UNE EXTENSION DES NORMES DE CODAGE

(30) Priority: 27.09.2012 US 201261706480 P
(43) Date of publication of application: 09.12.2020
(62) Divisional of application: 17171446.2
(73) Proprietor: Dolby Laboratories Licensing Corporation, San Francisco, CA 94103 (US)
(72) Inventor: YIN, Peng, Sunnyvale, CA 94085-4703 (US); LU, Taoran, Sunnyvale, CA California 94085 (US); CHEN, Tao, Sunnyvale, CA 94085-4703 (US)
(74) Representative: Herre, Peter

(56) References cited:
- WO-A1-2006/109986
- US-A1- 2011 243 252
- FRAN CR COIS E ET AL: "Prop. for CE9 Spat. Scal. with Crop", 15. JVT MEETING; 72. MPEG MEETING; 16-04-2005 - 22-04-2005; BUSAN, KR;(JOINT VIDEO TEAM OF ISO/IEC JTC1/SC29/WG11 AND ITU-T SG.16 ),, no. JVT-O040, 13 April 2005 (2005-04-13), XP030005986, ISSN: 0000-0417
- "Joint Scalable Video Model (JSVM) 11", 81. MPEG MEETING; 20070702 - 20070706; LAUSANNE; (MOTION PICTURE EXPERT GROUP OR ISO/IEC JTC1/SC29/WG11), , no. N9199; n9199 17 October 2007 (2007-10-17), XP030015693, Retrieved from the Internet: URL:http://phenix.int-evry.fr/mpeg/doc_end _user/documents/81_Lausanne/wg11/w9199.zip w9199_JSVM11.doc [retrieved on 2010-08-27]
- HISAO KUMAI ET AL: "Proposals for HEVC scalability Extension", 101. MPEG MEETING; 16-7-2012 - 20-7-2012; STOCKHOLM; (MOTION PICTURE EXPERT GROUP OR ISO/IEC JTC1/SC29/WG11),, no. m25749, 17 July 2012 (2012-07-17), XP030054083,

## Description

### CROSS-REFERENCE TO RELATED APPLICATIONS

This application is a European divisional application of European patent application EP 17171446.2 (reference: D12173EP02), for which EPO Form 1001 was filed 17 May 2017.

The present invention relates generally to images. More particularly, an embodiment of the present invention relates to inter-layer reference picture processing for coding-standard scalability.

### BACKGROUND

Audio and video compression is a key component in the development, storage, distribution, and consumption of multimedia content. The choice of a compression method involves tradeoffs among coding efficiency, coding complexity, and delay. As the ratio of processing power over computing cost increases, it allows for the development of more complex compression techniques that allow for more efficient compression. As an example, in video compression, the Motion Pictures Expert Group (MPEG) from the International Standards Organization (ISO) has continued improving upon the original MPEG-1 video standard by releasing the MPEG-2, MPEG-4 (part 2), and H.264/AVC (or MPEG-4, part 10) coding standards.

Despite the compression efficiency and success of H.264, a new generation of video compression technology, known as High Efficiency Video Coding (HEVC), in now under development. HEVC, for which a draft is available in *"*High efficiency video coding (HEVC) text specification draft 8," ITU-T/ISO/IEC Joint Collaborative Team on Video Coding (JCT-VC) document JCTVC-J1003, July 2012, by B. Bross, W.-J. Han, G. J. Sullivan, J.-R. Ohm, and T. Wiegand, is expected to provide improved compression capability over the existing H.264 (also known as AVC) standard, published as, *"*Advanced Video Coding for generic audio-visual services," ITU T Rec. H.264 and ISO/IEC 14496-10. As appreciated by the inventors here, it is expected that over the next few years H.264 will still be the dominant video coding standard used worldwide for the distribution of digital video. It is further appreciated that newer standards, such as HEVC, should allow for backward compatibility with existing standards.

As used herein, the term "coding standard" denotes compression (coding) and decompression (decoding) algorithms that may be both standard-based, open-source, or proprietary, such as the MPEG standards, Windows Media Video (WMV), flash video, VP8, and the like.

FRANCOIS, E. et al., "Prop. for CE9 Spat. Scal. with Crop", 15. JVT MEETING; 72. MPEG MEETING; 16-04-2005 - 22-04-2005; (JOINT VIDEO TEAM OF ISO/IEC JTC1/SC29/WG11 AND ITU-T SG.16), (20050413), no. JVT-O040, ISSN 0000-0417, XP030005986, discloses spatial scalable coding using cropped areas.

"Joint Scalable Video Model (JSVM) 11", 81. MPEG MEETING; 20070702 - 20070706; LAUSANNE; (MOTION PICTURE EXPERT GROUP OR ISO/IEC JTC1/SC29/WG11), no. N9199; n9199 17 October 2007 (2007-10-17), XP030015693, discloses a scalable video model with multiple scales in a temporal and spatial dimension.

WO 2006/109986 A1 discloses a method for decoding a video signal. A portion of a current image in a current layer is predicted based on a portion of a reference image and offset information. The offset information indicates a position offset between at least one boundary pixel of the reference image and at least one boundary pixel of the current image.

The approaches described in this section are approaches that could be pursued, but not necessarily approaches that have been previously conceived or pursued. Therefore, unless otherwise indicated, it should not be assumed that any of the approaches described in this section qualify as prior art merely by virtue of their inclusion in this section. Similarly, issues identified with respect to one or more approaches should not assume to have been recognized in any prior art on the basis of this section, unless otherwise indicated.

### SUMMARY

The invention is defined by the independent claims. The dependent claims concern optional features of some embodiments of the invention.

### BRIEF DESCRIPTION OF THE DRAWINGS

An embodiment of the present invention is illustrated by way of example, and not in way by limitation, in the figures of the accompanying drawings and in which like reference numerals refer to similar elements and in which:
FIG. 1 depicts an example implementation of a coding system supporting coding-standard scalability according to an embodiment of this invention;
FIG. 2A and FIG. 2B depict example implementations of a coding system supporting AVC/H.264 and HEVC codec scalability according to an embodiment of this invention;
FIG. 3 depicts an example of layered coding with a cropping window according to an embodiment of this invention;
FIG. 4 depicts an example of inter-layer processing for interlaced pictures according to an example useful for understanding this invention;
FIG. 5A and FIG. 5B depict examples of inter-layer processing supporting coding-standard scalability according to an example useful for understanding this invention;
FIG. 6 depicts an example of RPU processing for signal encoding model scalability according to an example useful for understanding this invention;
FIG. 7 depicts an example encoding process according to an example useful for understanding this invention;
FIG. 8 depicts an example decoding process according to an embodiment of this invention; and
FIG. 9 depicts an example decoding RPU process according to an embodiment of this invention.

### DESCRIPTION OF EXAMPLE EMBODIMENTS

Inter-layer reference picture processing for coding-standard scalability is described herein. Given a base layer signal, which is coded by a base layer (BL) encoder compliant to a first coding standard (e.g., H.264), a reference processing unit (RPU) process generates reference pictures and RPU parameters according to the characteristics of input signals in the base layer and one or more enhancement layers. These inter-layer reference frames may be used by an enhancement layer (EL) encoder which is compliant to a second coding standard (e.g., HEVC), to compress (encode) one or more enhancement layer signals, and combine them with the base layer to form a scalable bit stream. In a receiver, after decoding a BL stream with a BL decoder which is compliant to the first coding standard, a decoder RPU may apply received RPU parameters to generate inter-layer reference frames from the decoded BL stream. These reference frames may be used by an EL decoder which is compliant to the second coding standard to decode the coded EL stream.

In the following description, for the purposes of explanation, numerous specific details are set forth in order to provide a thorough understanding of the present invention. It will be apparent, however, that the present invention may be practiced without these specific details. In other instances, well-known structures and devices are not described in exhaustive detail, in order to avoid unnecessarily obscuring the present invention.

### OVERVIEW

Example embodiments described herein relate to inter-layer reference picture processing for coding-standard scalability. In one example useful for understanding the invention, video data are coded in a coding-standard layered bit stream. Given base layer (BL) and enhancement layer (EL) signals, the BL signal is coded into a BL stream using a BL encoder which is compliant to a first encoding standard. In response to the BL signal and the EL signal, a reference processing unit (RPU) determines RPU processing parameters. In response to the RPU processing parameters and the BL signal, the RPU generates an inter-layer reference signal. Using an EL encoder which is compliant to a second coding standard, the EL signal is coded into a coded EL stream, where the encoding of the EL signal is based at least in part on the inter-layer reference signal.

In an embodiment, a receiver demultiplexes a received scalable bitstream to generate a coded BL stream, a coded EL stream, and an RPU data stream. A BL decoder compliant to a first coding standard decodes the coded BL stream to generate a decoded BL signal. A receiver with an RPU may also decode the RPU data stream to determine RPU process parameters. In response to the RPU processing parameters and the BL signal, the RPU may generate an inter-layer reference signal. An EL decoder compliant to a second coding standard may decode the coded EL stream to generate a decoded EL signal, where the decoding of the coded EL stream is based at least in part on the inter-layer reference signal.

### LAYERED-BASED CODING-STANDARD SCALABILITY

Compression standards such as MPEG-2, MPEG-4 (part 2), H.264, flash, and the like are being used word-wide for delivering digital content through a variety of media, such as, DVD discs or Blu-ray discs, or for broadcasting over the air, cable, or broadband. As new video coding standards, such as HEVC, are developed, adoption of the new standards could be increased if they would support some backward compatibility with existing standards.

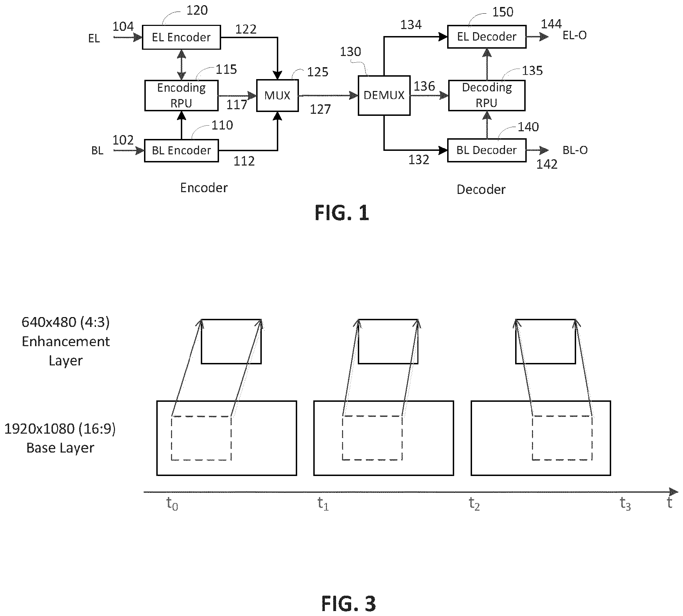

FIG. 1 depicts an example implementation of a system supporting coding-standard scalability. The encoder comprises a base layer (BL) encoder (110) and an enhancement layer (EL) encoder (120). In an example, BL Encoder 110 is a legacy encoder, such as an MPEG-2 or H.264 encoder, and EL Encoder 120 is a new standard encoder, such as an HEVC encoder. However, this system is applicable to any combination of either known or future encoders, whether they are standard-based or proprietary. The system can also be extended to support more than two coding standards or algorithms.

According to FIG. 1, an input signal may comprise two or more signals, e.g., a base layer (BL) signal 102 and one or more enhancement layer (EL) signals, e.g. EL 104. Signal BL 102 is compressed (or coded) with BL Encoder 110 to generate a coded BL stream 112. Signal EL 104 is compressed by EL encoder 120 to generate coded EL stream 122. The two streams are multiplexed (e.g., by MUX 125) to generate a coded scalable bit stream 127. In a receiver according to embodiment of this invention, a demultiplexor (DEMUX 130) may separate the two coded bit streams. A legacy decoder (e.g., BL Decoder 140) may decode only the base layer 132 to generate a BL output signal 142. However, a decoder that supports the new encoding method (EL Encoder 120), may also decode the additional information provided by the coded EL stream 134 to generate EL output signal 144. BL decoder 140 (e.g., an MPEG-2 or H.264 decoder) corresponds to the BL encoder 110. EL decoder 150 (e.g., an HEVC decoder) corresponds to the EL Encoder 120.

Such a scalable system can improve coding efficiency compared to a simulcast system by properly exploring inter-layer prediction, that is, by coding the enhancement layer signal (e.g., 104) by taking into consideration information available from the lower layers (e.g., 102). Since the BL Encoder and EL Encoder comply to different coding standards, in an example, coding standard-scalability may be achieved through a separate processing unit, the encoding reference processing unit (RPU) 115.

RPU 115 may be considered an extension of the RPU design described in PCT Application PCT/US2010/040545, "Encoding and decoding architecture for format compatible 3D video delivery," by A. Tourapis, et al., filed on June 30, 2010, and published as WO 2011/005624. The following descriptions of the RPU apply, unless otherwise specified to the contrary, both to the RPU of an encoder and to the RPU of a decoder. Artisans of ordinary skill in fields that relate to video coding will understand the differences, and will be capable of distinguishing between encoder-specific, decoder-specific and generic RPU descriptions, functions and processes upon reading of the present disclosure. Within the context of a video coding system as depicted in FIG. 1, the RPU (115) generates inter-layer reference frames based on decoded images from BL Encoder 110, according to a set of rules of selecting different RPU filters and processes.

The RPU 115 enables the processing to be adaptive at a region level, where each region of the picture/sequence is processed according to the characteristics of that region. RPU 115 can use horizontal, vertical, or two dimensional (2D) filters, edge adaptive or frequency based region-dependent filters, and/or pixel replication filters or other methods or means for interlacing, de-interlacing, filtering, up-sampling, and other image processing.

An encoder may select RPU processes and outputs regional processing signals, which are provided as input data to a decoder RPU (e.g., 135). The signaling (e.g., 117) may specifies the processing method on a per-region basis. For example, parameters that relate to region attributes such as the number, size, shape and other characteristics may be specified in an RPU-data related data header. Some of the filters may comprise fixed filter coefficients, in which case the filter coefficients need not be explicitly signaled by the RPU. Other processing modes may comprise explicit modes, in which the processing parameters, such as coefficient values are signaled explicitly. The RPU processes may also be specified per each color component.

The RPU data signaling 117 can either be embedded in the encoded bitstream (e.g., 127), or transmitted separately to the decoder. The RPU data may be signaled along with the layer on which the RPU processing is performed. Additionally or alternatively, the RPU data of all layers may be signaled within one RPU data packet, which is embedded in the bit stream either prior to or subsequent to embedding EL encoded data. The provision of RPU data may be optional for a given layer. In the event that RPU data is not available, a default scheme may thus be used for up-conversion of that layer. Not dissimilarly, the provision of an enhancement layer encoded bit stream is also optional.

An embodiment allows for multiple possible methods of selecting processing steps within an RPU. A number of criteria may be used separately or in conjunction in determining RPU processing. The RPU selection criteria may include the decoded quality of the base layer bitstream, the decoded quality of the enhancement layer bitstreams, the bit rate required for the encoding of each layer including the RPU data, and/or the complexity of decoding and RPU processing of the data.

The RPU 115 may serve as a pre-processing stage that processes information from BL encoder 110, before utilizing this information as a potential predictor for the enhancement layer in EL encoder 120. Information related to the RPU processing may be communicated (e.g., as metadata) to a decoder as depicted in FIG. 1 using an RPU Layer stream 136. RPU processing may comprise a variety of image processing operations, such as: color space transformations, non-linear quantization, luma and chroma up-sampling, and filtering. In a typical implementation, the EL 122, BL 112, and RPU data 117 signals are multiplexed into a single coded bitstream (127).

Decoder RPU 135 corresponds to the encoder RPU 115, and with guidance from RPU data input 136, may assist in the decoding of the EL layer 134 by performing operations corresponding to operations performed by the encoder RPU 115.

The embodiment depicted in FIG. 1 can easily be extended to support more than two layers. Furthermore, it may be extended to support additional scalability features, including: temporal, spatial, SNR, chroma, bit-depth, and multi-view scalability.

### H.264 and HEVC Coding-standard Scalability

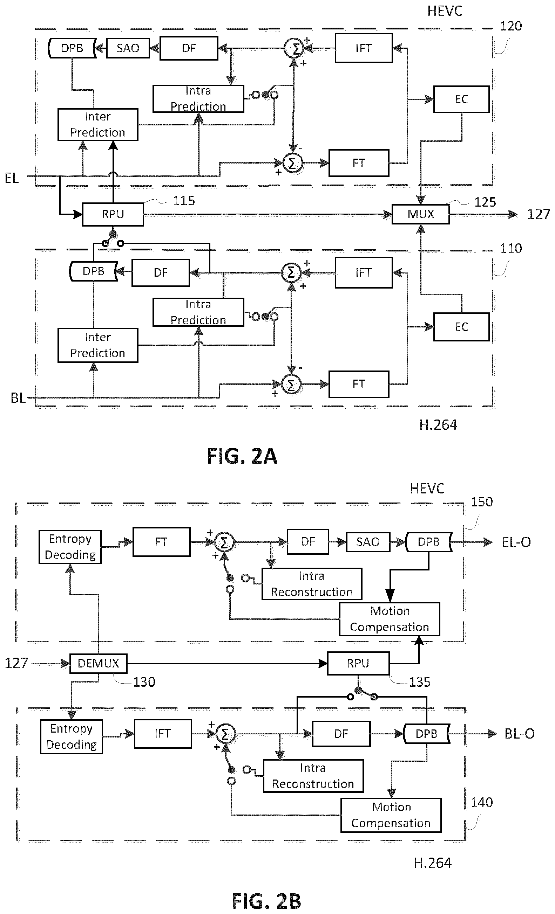

FIG. 2A and FIG. 2B depict an example for layer-based coding-standard scalability as it may be applied to the HEVC and H.264 standards. Without loss of generality, FIG. 2A and FIG. 2B depict only two layers; however, the methods can easily be extended to systems that support multiple enhancement layers.

As depicted in FIG. 2A, both H.264 encoder 110 and HEVC encoder 120 comprise intra prediction, inter prediction, forward transform and quantization (FT), inverse transforms and quantization (IFT), entropy coding (EC), deblocking filters (DF), and Decoded Picture Buffers (DPB). In addition, an HEVC encoder includes also a Sample Adaptive Offset (SAO) block. In an example, as will be explained later on, RPU 115 may access BL data either before the deblocking filter (DF) or from the DPB. Similarly, in a multi-standard decoder (see FIG. 2B) according to an embodiment of this invention, decoder RPU 135 may also access BL data either before the deblocking filter (DF) or from the DPB.

In scalable video coding, the term "multi-loop solution" denotes a layered decoder where pictures in an enhancement layer are decoded based on reference pictures extracted by both the same layer and other sub-layers. The pictures of the base/reference layers are reconstructed and stored in the Decoded Picture Buffer (DPB). These base layer pictures, called inter-layer reference pictures, can serve as additional reference pictures, in decoding the enhancement layer. The enhancement layer then has the options to use either temporal reference pictures or inter-layer reference pictures. In general, inter-layer prediction helps to improve the EL coding efficiency in a scalable system. Since the AVC and HEVC are two different coding standards and they use different encoding processes, additional inter-layer processing may be required to guarantee that AVC-coded pictures are considered valid HEVC reference pictures. In an embodiment, such processing may be performed by RPU 115, as it will be explained next for various cases of interest. For coding standard scalability, the use of RPU 115 aims to resolve the differences or conflicts arising from using two different standards, both at a high syntax level and the coding tools level.

### Picture Order Count (POC)

HEVC and AVC have several differences at the high level syntax. In addition, the same syntax may have a different meaning in each standard. The RPU can work as a high-level syntax "translator" between the base layer and the enhancement layer. One such example is the syntax related to Picture Order Count (POC). In inter-layer prediction, it is important to synchronize the inter-layer reference pictures from the base layer with the pictures being encoded in the enhancement layer. Such synchronization is even more important when the base layer and the enhancement layers use different picture coding structures. For both the AVC and HEVC standards, the term Picture Order Count (POC) is used to indicate the display order of the coded pictures. However, in AVC, there are three methods to signal POC information (indicated by the variable **pic_order_cnt_type),** while in HEVC, only one method is allowed, which is the same as pic_order_cnt_type == 0 in the AVC case. In an example, when **pic_order_cnt_type** is not equal to 0 in an AVC bitstream, then the RPU (135) will need to translate it into a POC value that conforms to the HEVC syntax. In an example, an encoder RPU (115) may signal additional POC-related data by using a new **pic_order_cnt_lsb** variable, as shown in Table 1. In another example, the encoder RPU may simply force the base layer AVC encoder to only use pic_order_cnt_type == 0.

**Table 1 POC syntax**

| | |
|---|---|
| POC() { | **Descriptor** |
| **pic_order_cot_lsb** | u(1) |
| } | |

In Table 1, **pic_order_cnt_lsb** specifies the picture order count modulo MaxPicOrderCntLsb for the current inter-layer reference picture. The length of the pic_order_cnt_lsb syntax element is log2_max_pic_order_cnt_lsb_minus4 + 4 bits. The value of the pic_order_cnt_lsb shall be in the range of 0 to MaxPicOrderCntLsb - 1, inclusive. When pic_order_cnt_lsb is not present, pic_order_cnt_lsb is inferred to be equal to 0. Cropping Window

In AVC coding, the picture resolution must be a multiple of 16. In HEVC, the resolution can be a multiple of 8. When processing an inter-layer reference picture in the RPU, a cropping window might be used to get rid of padded pixels in AVC. If the base layer and the enhancement layer have different spatial resolution (e.g., a base layer is 1920 x 1080 and the enhancement layer is 4K), or if the picture aspect ratios (PAR) are different (say, 16:9 PAR for the enhancement layer and 4:3 PAR for the base layer), the image has to be cropped and may be resized accordingly. An example of cropping window related RPU syntax is shown in Table 2.

**Table 2: Picture Cropping Syntax**

| | |
|---|---|
| pic_cropping( ) { | **Descriptor** |
| **pic_cropping_flag** | u(1) |
| if( pic_cropping_flag) { | |
| **pic_crop_left_offset** | ue(v) |
| **pic_crop_right_offset** | ue(v) |
| **pic_crop_top**_**offset** | ue(v) |
| **pic_crop_bottom_offset** | ue(v) |
| } | |
| } | |

In Table 2, **pic_cropping_flag** equal to 1 indicates that the picture cropping offset parameters follow next. If pic_cropping_flag = 0, then the picture cropping offset parameters are not present and no cropping is required.

**pic_crop_left_offset**, **pic_crop_right_offset**, **pic_crop_top_offset**, and **pic_crop_bottom_offset** specify the number of samples in the pictures of the coded video sequence that are input to the RPU decoding process, in terms of a rectangular region specified in picture coordinates for RPU input.

Note that since the RPU process is performed for each inter-layer reference, the cropping window parameters can change on a frame-by-frame basis. Adaptive region-of-interest based video retargeting is thus supported using the pan-(zoom)-scan approach.

FIG. 3 depicts an example of layered coding, where an HD (e.g., 1920x1080) base layer is coded using H.264 and provides a picture that can be decoded by all legacy HD decoders. A lower-resolution (e.g., 640x480) enhancement layer may be used to provide optional support for a "zoom" feature. The EL layer has a smaller resolution than the BL, but may be encoded in HEVC to reduce the overall bit rate. Inter-layer coding, as described herein, may further improve the coding efficiency of this EL layer.

### In-loop Deblocking Filter

Both AVC and HEVC employ a deblocking filter (DF) in the coding and decoding processes. The deblocking filter is intended to reduce the blocking artifacts due to the block based coding. But their designs in each standard are quite different. In AVC, the deblocking filter is applied on a 4x4 sample grid basis, but in HEVC, the deblocking filter is only applied to the edges which are aligned on an 8x8 sample grid. In HEVC, the strength of the deblocking filter is controlled by the values of several syntax elements similar to AVC, but AVC supports five strengths while HEVC supports only three strengths. In HEVC, there are less cases of filtering compared to AVC. For example, for luma, one of three cases is chosen: no filtering, strong filtering and weak filtering. For chroma, there are only two cases: no filtering and normal filtering. To align the deblocking filter operations between the base layer reference picture and a temporal reference picture from the enhancement layer, several approaches can be applied.

In one example, the reference picture without AVC deblocking may be accessed directly by the RPU, with no further post-processing. In another example, the RPU may apply the HEVC deblocking filter to the inter-layer reference picture. The filter decision in HEVC is based on the value of several syntax elements, such as transform coefficients, reference index, and motion vectors. It can be really complicated if the RPU needs to analyze all the information to make a filter decision. Instead, one can explicitly signal the filter index on a 8x8 block level, CU (Coding Unit) level, LCU/CTU (Largest Coding Unit or Coded Tree Unit) level, multiple of LCU level, slice level or picture level. One can signal luma and chroma filter indexes separately or they can share the same syntax. Table 3 shows an example of how the deblocking filter decision could be indicated as part of an RPU data stream.

**Table 3: Deblocking filter syntax**

| | |
|---|---|
| deblocking(rx, ry ) { | **Descriptor** |
| **filter_idx** | ue(v) |
| } | |

In Table 3, **filter_idx** specifies the filter index for luma and chroma components. For luma, filter_idx equal to 0 specifies no filtering. filter_idx equal to 1 specifies weak filtering, and filter_idx equal to 2 specifies strong filtering. For chroma, filter_idx equal to 0 or 1 specifies no filtering, and filter_idx equal to 2 specifies normal filtering.

### Sample Adaptive Offset (SAO)

SAO is a process which modifies, through a look-up table, the samples after the deblocking filter (DF). As depicted in FIG. 2A and FIG. 2B, it is only part of the HEVC standard. The goal of SAO is to better reconstruct the original signal amplitudes by using a look-up table that is described by a few additional parameters that can be determined by histogram analysis at the encoder side. According to this invention, the RPU can process the deblocking/non-deblocking inter-layer reference picture from the AVC base layer using the exact SAO process as described in HEVC. The signaling can be region based, adapted by CTU (LCU) level, multiple of LCU levels, a slice level, or a picture level. Table 4 shows an example syntax for communicating SAO parameters. In Table 4, the notation syntax is the same as the one described in the HEVC specification.

**Table 4: Sample Adaptive Offset Syntax**

| | |
|---|---|
| sao( rx, ry ){ | **Descriptor** |
| if( rx > 0 ) { | |
| **sao_merge_left_flag** | ue(v) |
| } | |
| if( ry > 0 && !sao_merge_left_flag) { | |
| **sao_merge_up_flag** | ue(v) |
| } | |
| if( !sao_merge_up_flag && !sao_merge_left_flag ) { | |
| for( cIdx = 0; cIdx < 3; cIdx++ ) { | |
| if( ( slice_sao_luma_flag && cIdx = = 0 ) \| \| ( slice_sao_chroma_flag && cIdx > 0 )) { | |
| if( cIdx = = 0 ) | |
| **sao_type_idx_luma** | ue(v) |
| if( cIdx = = 1 ) | |
| **sao_type_idx_chroma** | ue(v) |
| if( SaoTypeIdx[ cIdx ][ rx ][ ry ] != 0) { | |
| for( i = 0; i < 4; i++) | |
| **sao_offset_abs**[ cIdx ][ rx][ ry ][ i ] | ue(v) |
| if( SaoTypeIdx[ cIdx ][ rx ][ ry ]= = 1) { | |
| for( i = 0; i < 4; i++ ) { | |
| if( sao_offset_abs[ cIdx ][ rx ][ ry ][ i ]!= 0 ) | |
| **sao_offset_sign**[ cIdx ][ rx ][ ry ][ i ] | ae(v) |
| **sao_band_position**[ cIdx ][ rx ][ ry ] | ae(v) |
| } else { | |
| if( cIdx = = 0 ) | |
| **sao_eo_class_luma** | ae(v) |
| if( cIdx = = 1 ) | |
| **sao**_**eo**_**class**_**chroma** | ae(v) |
| } | |
| } | |
| } | |
| } | |
| } | |
| } | |

### Adaptive Loop Filter (ALF)

During the development of HEVC, an adaptive loop filter (ALF) was also evaluated as a processing block following SAO; however, ALF is not part of the first version of HEVC. Since ALF processing can improve inter-layer coding, if implemented by a future encoder, it is another processing step that could be implemented by the RPU as well. The adaptation of ALF can be region based, adapted by a CTU (LCU) level, multiple of LCU levels, a slice level, or a picture level. An example of ALF parameters is described by alf_picture_info() in, *"*High efficiency video coding (HEVC) text specification draft 7," by B. Bross, W.-J. Han, G. J. Sullivan, J.-R. Ohm, and T. Wiegand , ITU-T/ISO/IEC Joint Collaborative Team on Video Coding (JCT-VC) document JCTVC-I1003, May 2012, which is incorporated herein by reference in its entirety.

### Interlaced and Progressive Scanning

AVC supports coding tools for both progressive and interlaced content. For interlaced sequences, it allows both frame coding and field coding. In HEVC, no explicit coding tools are present to support the use of interlaced scanning. HEVC provides only metadata syntax (Field Indication SEI message syntax and VUI) to allow an encoder to indicate how interlaced content was coded. The following scenarios are considered.

### Scenario 1: Both the base layer and the enhancement layer are interlaced

For this scenario, several methods can be considered. In a first example, the encoder may be constrained to change the base layer encoding in a frame or field mode only on a per sequence basis. The enhancement layer will follow the coding decision from the base layer. That is, if the AVC base layer uses field coding in one sequence, the HEVC enhancement layer will use field coding in the corresponding sequence too. Similarly, if the AVC base layer uses frame coding in one sequence, the HEVC enhancement layer will use frame coding in the corresponding sequence too. It is noted that for field coding, the vertical resolution signaled in the AVC syntax is the frame height; however, in HEVC, the vertical resolution signaled in the syntax is the field height. Special care must be taken in communicating this information in the bit stream, especially if a cropping window is used.

In another example, the AVC encoder may use picture-level adaptive frame or field coding, while the HEVC encoder performs sequence-level adaptive frame or field coding. In both cases, the RPU can process inter-layer reference pictures in one of the following ways: a) The RPU may process the inter-layer reference picture as fields, regardless of the frame or field coding decision in the AVC base layer, or b) the RPU may adapt the processing of the inter-layer reference pictures based on the frame/field coding decision in the AVC base layer. That is, if the AVC base layer is frame-coded, the RPU will process the inter-layer reference picture as a frame, otherwise, it will process the inter-layer reference picture as fields.

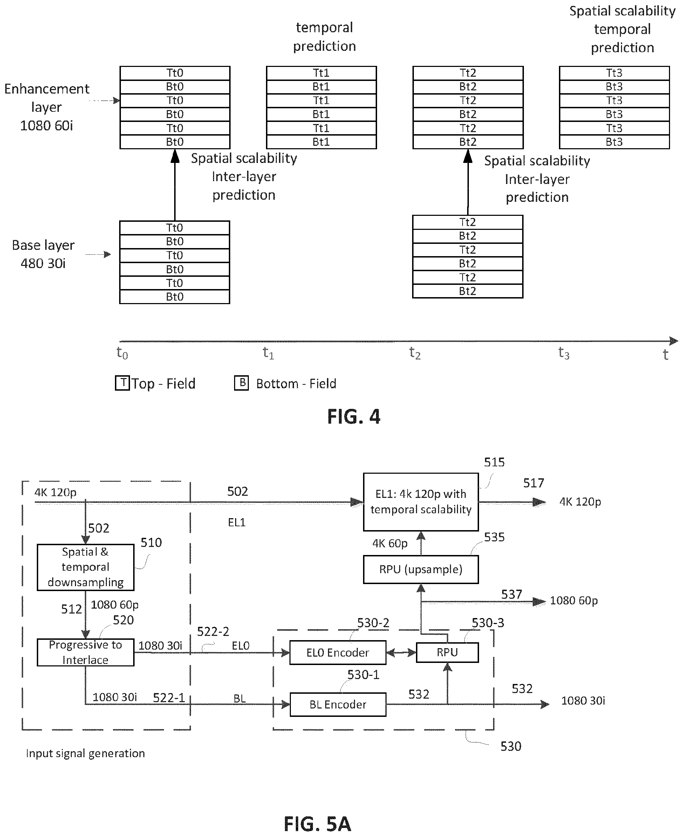

FIG. 4 depicts an example of Scenario 1. The notation *D*i or *D*p denotes frame rate and whether the format is interlaced or progressive. Thus, *D*i denotes *D* interlaced frames per second (or 2*D* fields per second) and *D*p denotes *D* progressive frames per second. In this example, the base layer comprises a standard-definition (SD) 720x480, 30i sequence coded using AVC. The enhancement layer is a high-definition (HD) 1920x1080, 60i sequence, coded using HEVC. This example incorporates codec scalability, temporal scalability, and spatial scalability. Temporal scalability is handled by the enhancement layer HEVC decoder using a hierarchical structure with temporal prediction only (this mode is supported by HEVC in a single-layer). Spatial scalability is handled by the RPU, which adjusts and synchronizes slices of the inter-layer reference field/frame with it is corresponding field/frame slices in the enhancement layer.

### Scenario 2: The base layer is interlaced and the enhancement layer is progressive

In this scenario, the AVC base layer is an interlaced sequence and the HEVC enhancement layer is a progressive sequence. FIG. 5A depicts an example wherein an input 4K 120p signal (502) is encoded as three layers: a 1080 30i BL stream (532), a first enhancement layer (EL0) stream (537), coded as 1080 60p, and a second enhancement layer stream (EL1) (517), coded as 4K 120p. The BL and EL0 signals are coded using an H.264/AVC encoder while the EL1 signal may be coded using HEVC. On the encoder, starting with a high-resolution, high-frame 4K, 120p signal (502), the encoder applies temporal and spatial down-sampling (510) to generate a progressive 1080 60p signal 512. Using a complementary progressive to deinterlacing technique (520), the encoder may also generate two complimentary, 1080 30i, interlaced signals BL 522-1 and EL0 522-2. As used herein, the term "complementary progressive to deinterlacing technique" denotes a scheme that generates two interlaced signals from the same progressive input, where both interlaced signals have the same resolution, but one interlaced signal includes the fields from the progressive signal that are not part of the second interlaced signal. For example, if the input signal at time Tᵢ, *i*=0, 1,...., *n,* is divided into top and bottom interlaced fields (Top-Tᵢ, Bottom-Tᵢ), then the first interlaced signal may be constructed using (Top-T₀, Bottom-T₁), (Top-T₂, Bottom-T₃), etc., while the second interlaced signal may be constructed using the remaining fields, that is: (Top-T₁, Bottom-T₀), (Top-T₃, Bottom-T₂), etc.

In this example, the BL signal 522-1 is a backward-compatible interlaced signal that can be decoded by legacy decoders, while the EL0 signal 522-2 represents the complimentary samples from the original progressive signal. For the final picture composition of the full frame-rate, every reconstructed field picture from the BL signal must be combined with a field picture within the same access unit but with the opposite field parity. Encoder 530 may be an AVC encoder that comprises two AVC encoders (530-1 and 530-2) and RPU processor 530-3. Encoder 530 may use interlayer processing to compress signal EL0 using reference frames from both the BL and the EL0 signals. RPU 530-3 may be used to prepare the BL reference frames used by the 530-2 encoder. It may also be used to create progressive signal 537, to be used for the coding of the EL1 signal 502 by EL1 encoder 515.

In an example, an up-sampling process in the RPU (535) is used to convert the 1080 60p output (537) from RPU 530-3 into a 4K 60p signal to be used by HEVC encoder 515 during inter-layer prediction. EL1 signal 502 may be encoded using temporal and spatial scalability to generate a compressed 4K 120p stream 517. Decoders can apply a similar process to either decode a 1080 30i signal, a 1080 60p signal, or a 4K 120p signal.

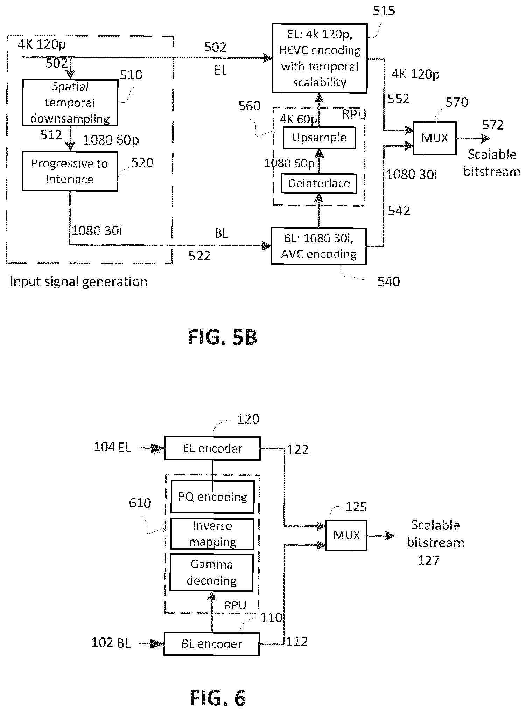

FIG. 5B depicts another example implementation of an interlaced/progressive system. This is a two layer system, where a 1080 30i base layer signal (522) is encoded using an AVC encoder (540) to generate a coded BL stream 542, and a 4K 120p enhancement layer signal (502) is encoded using an HEVC encoder (515) to generate a coded EL stream 552. These two streams may be multiplexed to form a coded scalable bit stream 572.

As depicted in FIG. 5B, RPU 560 may comprise two processes: a de-interlacing process, which converts BL 522 to a 1080 60p signal, and an up-sampling process to convert the 1080 60p signal back to a 4K 60p signal, so the output of the RPU may be used as a reference signal during inter-layer prediction in encoder 515.

### Scenario 3: The base layer is progressive and the enhancement layer is interlaced

In this scenario, in one example, the RPU may convert the progressive inter-layer reference picture into an interlaced picture. These interlaced pictures can be processed by the RPU as a) always fields, regardless of whether the HEVC encoder uses sequence-based frame or field coding, or as b) fields or frames, depending on the mode used by the HEVC encoder. Table 5 depicts an example syntax that can be used to guide the decoder RPU about the encoder process.

**Table 5: Interlace Processing Syntax**

| | |
|---|---|
| interlace_process( ) { | **Descriptor** |
| **base_field_seq_flag** | u(1) |
| **enh_field_seq_flag** | u(1) |
| } | |

In Table 5, **base_field_seq_flag** equal to 1 indicates that the base layer coded video sequence conveys pictures that represent fields. base_field_seq_flag equal to 0 indicates that the base layer coded video sequence conveys pictures that represent frames.

**enh_field_seq_flag** equal to 1 indicates that the enhancement layer coded video sequence conveys pictures that represent fields. enh_field_seq_flag equal to 0 indicates that the enhancement layer coded video sequence conveys pictures that represent frames.

Table 6 shows how an RPU may process the reference pictures based on the base field_seq_flag or enh_field_seq_flag flags.

**Table 6: RPU processing for progressive/interlaced scanning sequences**

| **base_field_seq_flag** | **enh_field_seq_flag** | **RPU processing** |
|---|---|---|
| 1 | 1 | field |
| 1 | 0 | De-interlacing + frame |
| 0 | 1 | Interlacing + field |
| 0 | 0 | frame |

### Signal Encoding Model Scalability

Gamma-encoding is arguably the most widely used signal encoding model, due to its efficiency for representing standard dynamic range (SDR) images. In recent research for high-dynamic range (HDR) imaging, it was found that for several types of images, other signal encoding models, such as the Perceptual Quantizer (PQ) described in *"*Parameter values for UHDTV", a submission to SG6 WP 6C, WP6C/USA002, by Craig Todd, or U.S. Provisional patent application with Ser. Number 61/674,503, filed on July 23, 2012, and titled "Perceptual luminance nonlinearity-based image data exchange across different display capabilities," by Jon S. Miller et al., could represent the data more efficiently. Therefore, it is possible that a scalable system may have one layer of SDR content which is gamma-coded, and another layer of high dynamic range content which is coded using other signal encoding models.

FIG. 6 depicts an example where RPU 610 (e.g., RPU 115 in FIG. 1) may be set to adjust the signal quantizer of the base layer. Given a BL signal 102 (e.g., 8-bit, SDR video signal, gamma encoded in 4:2:0 Rec. 709), and an EL signal 104 (e.g., 12-bit HDR video signal, PQ encoded in 4:4:4 in P3 color space), processing in RPU 610 may comprise: gamma decoding, other inverse mappings (e.g., color space conversions, bit-depth conversions, chroma sampling, and the like), and SDR to HDR perceptual quantization (PQ). The signal decoding and encoding method (e.g., gamma and PQ), and related parameters, may be part of metadata that are transmitted together with the coded bitstream or they can be part of a future HEVC syntax. Such RPU processing may be combined with other RPU processing related to other types of scalabilities, such as bit-depth, chroma format, and color space scalability. As depicted in FIG. 1, similar RPU processing may also be performed by a decoder RPU during the decoding of the scalable bit stream 127.

Scalability extension can include several other categories, such as: spatial or SNR scalability, temporal scalability, bit-depth scalability, and chroma resolution scalability. Hence, an RPU can be configured to process inter-layer reference pictures under a variety of coding scenarios. For better encoder-decoder compatibility, encoders may incorporate special RPU-related bit stream syntax to guide the corresponding RPU decoder. The syntax can be updated at a variety of coding levels, including: the slice level, the picture level, the GOP level, the scene level, or at the sequence level. It also can be included in a variety of auxiliary data, such as: the NAL unit header, Sequence Parameter Set (SPS) and its extension, SubSPS, Picture Parameter Set (PPS), slicer header, SEI message, or a new NAL unit header. Since there may be a lot of RPU-related processing tools, for maximum flexibility and ease of implementation, in one embodiment, we propose to reserve a new NAL unit type for the RPU to make it a separate bitstream. Under such an implementation, a separate RPU module is added to the encoder and decoder modules to interact with the base layer and the one or more enhancement layers. Table 7 shows an example of RPU data syntax which includes rpu_header_data() (shown in Table 8) and rpu_payload_data() (shown in Table 9), in a new NAL unit. In this example, multiple partitions are enabled to allow region based deblocking and SAO decisions.

**Table 7: RPU data syntax**

| | |
|---|---|
| rpu data () { | **Descriptor** |
| rpu header data() | |
| rpu_payload_data() | |
| rbsp_trailing_bits() | |
| } | |

**Table 8: RPU header data syntax**

| | |
|---|---|
| rpu_header_data () { | **Descriptor** |
| **rpu_type** | u(6) |
| POC() | |
| pic_cropping( ) | |
| **deblocking**_**present**_**flag** | u(1) |
| **sao**_**present**_**flag** | u(1) |
| **alf**_**present**_**flag** | u(1) |
| if (alf present flag) | |
| alf_picture_info() | |
| interlace process() | |
| **num**_**x**_**partitions**_**minus1** | ue(v) |
| **num_y_partitions_minus1** | ue(v) |
| } | |

**Table 9: RPU payload data syntax**

| | |
|---|---|
| rpu_payload_data () { | **Descriptor** |
| for (y = 0, y <= num_y_partitions_minus1; y++ ) { | |
| for (x = 0; x < =num_x_partitions_minus1; x++ ) { | |
| if (deblocking_present flag) | |
| deblocking() | |
| if (sao present flag) | |
| sao() | |
| /* below is to add other parameters related to upsampling filter, mapping, etc.*/ | |
| /* example 1: if (rpu_type == SPATIAL SCALABILITY) */ | |
| /* rpu process spatial scalability() */ | |
| /* example 2: if (rpu type == BIT DEPTH SCALABILITY) */ | |
| /* rpu process bit depth scalability() */ | |
| .... | |
| } | |
| } | |
| } | |

In Table 8, **rpu_type** specifies the prediction type purpose for the RPU signal. It can be used to specify different kinds of scalability. For example, rpu_type equal to 0 may specify spatial scalability, and rpu_type equal to 1 may specifies bit-depth scalability. In order to combine different scalability modes, one may also use a masking variable, such as **rpu_mask.** For example, rpu_mask=0x01 (binary 00000001) may denote that only spatial scalability is enabled. rpu_mask=0x02 (binary 00000010) may denote that only bit-depth scalability is enabled. rpu_mask = 0x03 (binary 00000011) may denote that both spatial and bit-depth scalability are enabled.

**deblocking_present_flag** equal to 1 indicates syntax related to deblocking filter is present in the RPU data.

**sao_present_flag** equal to 1 indicates syntax related to SAO is present in the RPU data.

**alf_present_flag** equal to 1 indicates syntax related to ALF filter is present in the RPU data.

**num_x_partitions_minus1** signals the number of partitions that are used to subdivide the processed picture in the horizontal dimension in RPU.

**num_y_partitions_minus1** signals the number of partitions that are used to subdivide the processed picture in the vertical dimension in RPU.

In another embodiment, instead of using POC to synchronize the base layer and enhancement layer pictures, the RPU syntax is signaled at the picture level, so multiple pictures can reuse the same RPU syntax, which result in lower bit overhead and possibly reducing processing overhead in some implementations. Under this implementation, the rpu_id will be added into the RPU syntax. In slice_header(), it will always refer to rpu_id to synchronize RPU syntax with the current slice, where the **rpu_id** variable identifies the rpu_data() that is referred to in the slice header.

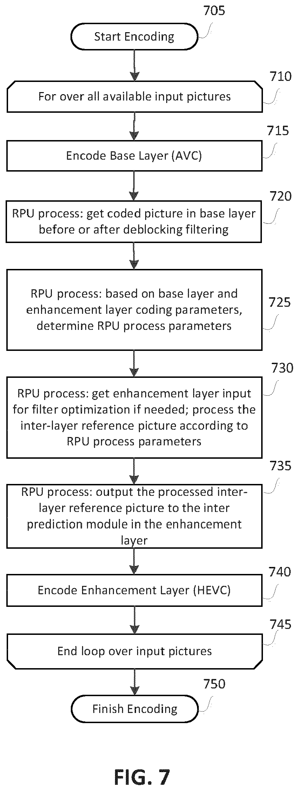

FIG. 7 depicts an example encoding process according to an example. Given a series of pictures (or frames), the encoder encodes a base layer with a BL encoder using a first compression standard (e.g., AVC) (715). Next (720, 725), as depicted in FIG. 2A and 2B, RPU process 115, may access base layer pictures either before or after the deblocking filter (DF) The decision can be made based on RD (rate-distortion) optimization or the processing that RPU performs. For example, if RPU performs up-sampling, which may also be used in deblocking the block boundaries, then the RPU may just use the decoded base layer before the deblocking filter, and the up-sampling process may retain more details. RPU 115 may determine the RPU processing parameters based on the BL and EL coding parameters. If needed, the RPU process may also access data from the EL input. Then, in step 730, the RPU processes the inter-layer reference pictures according to the determined RPU process parameters. The generated inter-layer pictures (735) may now be used by the EL encoder using a second compression standard (e.g., an HEVC encoder) to compress the enhancement layer signal.

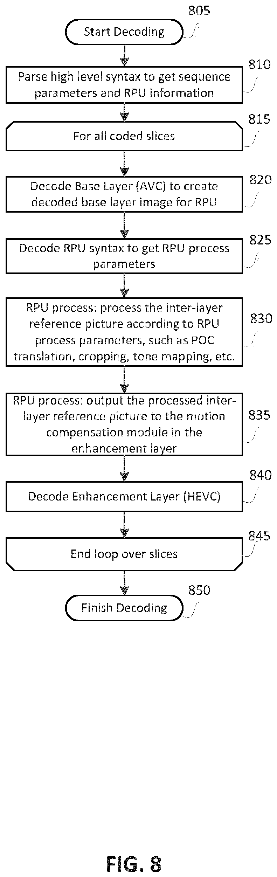

FIG. 8 depicts an example decoding process according to an embodiment. First (810), the decoder parses the high-level syntax of the input bitstream to extract sequence parameters and RPU-related information. Next (820), it decodes the base layer with a BL decoder according to the first compression standard (e.g., an AVC decoder). After decoding the RPU-process related parameters (825), the RPU process generates inter-layer reference pictures according to these parameters (steps 830 and 835). Finally, the decoder decodes the enhancement layer using an EL decoder that complies with the second compression standard (e.g., an HEVC decoder) (840).

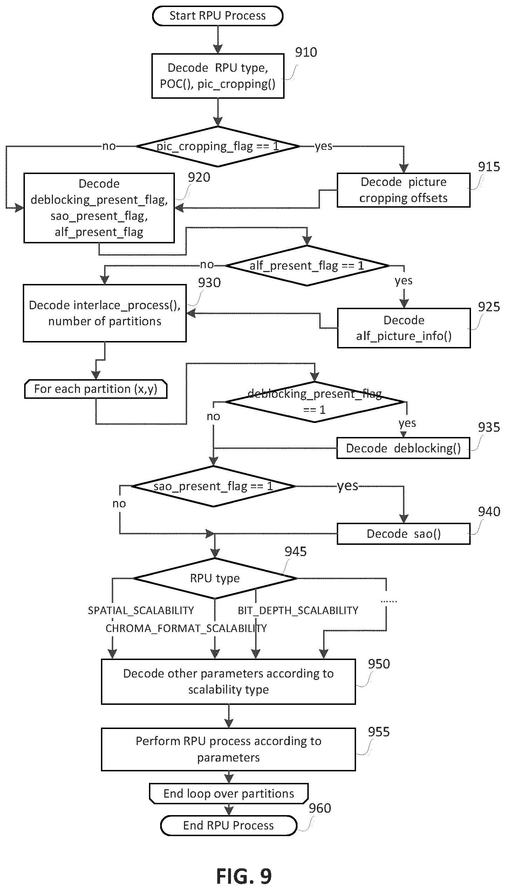

Given the example RPU parameters defined in Tables 1-9, FIG. 9 depicts an example decoding RPU process according to an embodiment. First (910), the decoder extracts from the bitstream syntax the high-level RPU-related data, such as RPU type (e.g., **rpu_type** in Table 8), POC(), and pic_cropping(). The term "RPU type" refers to RPU-related sub-processes that need to be considered, such as: coding-standard scalability, spatial scalability, bit-depth scalability, and the like, as discussed earlier. Given a BL frame, cropping, and ALF-related operations may be processed first (e.g., 915, 925). Next, after extracting the required interlaced or deinterlaced mode (930), for each partition, the RPU performs deblocking and SAO-related operations (e.g., 935, 940). If additional RPU processing needs to be performed (945), then the RPU decodes the appropriate parameters (950) and then performs operations according to these parameters. At the end of this process, a sequence of inter-layer frames is available to the EL decoder to decode the EL stream.

### EXAMPLE COMPUTER SYSTEM IMPLEMENTATION

Embodiments of the present invention may be implemented with a computer system, systems configured in electronic circuitry and components, an integrated circuit (IC) device such as a microcontroller, a field programmable gate array (FPGA), or another configurable or programmable logic device (PLD), a discrete time or digital signal processor (DSP), an application specific IC (ASIC), and/or apparatus that includes one or more of such systems, devices or components. The computer and/or IC may perform, control or execute instructions relating to RPU processing, such as those described herein. The computer and/or IC may compute any of a variety of parameters or values that relate to RPU processing as described herein. The RPU-related embodiments may be implemented in hardware, software, firmware and various combinations thereof.

Certain implementations of the invention comprise computer processors which execute software instructions which cause the processors to perform a method of the invention. For example, one or more processors in a display, an encoder, a set top box, a transcoder or the like may implement methods RPU processing as described above by executing software instructions in a program memory accessible to the processors. The invention may also be provided in the form of a program product. The program product may comprise any medium which carries a set of computer-readable signals comprising instructions which, when executed by a data processor, cause the data processor to execute a method of the invention. Program products according to the invention may be in any of a wide variety of forms. The program product may comprise, for example, physical media such as magnetic data storage media including floppy diskettes, hard disk drives, optical data storage media including CD ROMs, DVDs, electronic data storage media including ROMs, flash RAM, or the like. The computer-readable signals on the program product may optionally be compressed or encrypted.

Where a component (e.g. a software module, processor, assembly, device, circuit, etc.) is referred to above, unless otherwise indicated, reference to that component (including a reference to a "means") should be interpreted as including as equivalents of that component any component which performs the function of the described component (e.g., that is functionally equivalent), including components which are not structurally equivalent to the disclosed structure which performs the function in the illustrated example embodiments of the invention.

### EQUIVALENTS, EXTENSIONS, ALTERNATIVES AND MISCELLANEOUS

Example embodiments that relate to RPU processing and standards-based codec scalability are thus described. In the foregoing specification, embodiments of the present invention have been described with reference to numerous specific details that may vary from implementation to implementation. Thus, the sole and exclusive indicator of what is the invention, and is intended by the applicants to be the invention, is the set as recited in claims. The specification and drawings are, accordingly, to be regarded in an illustrative rather than a restrictive sense.

## Claims

1. A method for decoding a layered video stream (127) by a decoder, the method comprising:
receiving a coded bitstream (127) comprising a coded base layer - BL - stream (132) coded using gamma encoding for representation in a standard dynamic range - SDR -, a coded enhancement layer - EL - stream (134) coded in perceptual quantization - PQ - encoding for representation in a high dynamic range - HDR -, and an inter-layer prediction unit data stream (136) comprising inter-layer prediction unit processing parameters comprising sample adaptive offset - SAO - parameters;
decoding the coded BL stream (132) using a BL decoder (140) to generate a decoded BL signal (142);
decoding the inter-layer prediction unit data stream (136) to determine the inter-layer prediction unit processing parameters;
in response to determining that the inter-layer prediction unit processing parameters comprise a picture cropping flag, the picture cropping flag indicating that offset cropping parameters are present in the inter-layer prediction unit processing parameters:
accessing a base layer picture in the decoded BL signal;
accessing the offset cropping parameters;
generating a reference picture for the enhancement layer by cropping a rectangular region of the base layer picture according to the offset cropping parameters, wherein generating the reference picture for the enhancement layer further comprises:
applying gamma decoding and SDR to HDR perceptual quantization according to the received inter-layer prediction unit processing parameters; and
applying a SAO process compliant to the HEVC standard according to the received SAO parameters;
decoding the coded EL stream (134) using an EL decoder (150) to generate a decoded EL signal (144), wherein the coded EL stream (134) is compliant to the HEVC standard, the decoding of the EL stream (134) is being based at least in part on the reference picture for the enhancement layer.

2. The method of claim 1, wherein the BL stream (132) and the EL stream (134) have at least one of different spatial resolution or different picture aspect ratios.

3. The method of claim 1 or 2, wherein the inter-layer prediction unit processing parameters comprises parameters related to in-loop deblocking filtering and generating of the reference picture for the enhancement layer further comprises, according to the parameters related to in-loop deblocking filtering:
selecting a deblocking filter strength out of several filter strengths, and applying an in-loop deblocking filter with the deblocking filter strength.

4. The method of any preceding claim,
wherein the base layer picture is in a first spatial resolution, and
wherein generating the reference picture comprises scaling the cropped rectangular region from the first spatial resolution to a second spatial resolution such that the reference picture is in the second spatial resolution.

5. The method of any preceding claim, wherein the offset cropping parameters are updated on a frame-by-frame basis in the coded bitstream.

6. The method of any preceding claim, further comprising detecting that the picture cropping flag is set to a predetermined value.

7. The method of claim 6 wherein the predetermined value is 1.

8. The method of any preceding claim, wherein the offset cropping parameters comprise a left offset, a right offset, a top offset, and a bottom offset.

9. A decoder for decoding a layered video stream (127), comprising:
one or more processors configured to process the method of any preceding claim.

10. A computer-readable medium coupled to one or more processors having instructions stored thereon which, when executed by the one or more processors, cause the one or more processors to perform the method of any of claims 1-8.

## Patentansprüche

1. Verfahren zum Decodieren eines geschichteten Videodatenstroms (127) durch einen Decoder, wobei das Verfahren umfasst:
Empfangen eines codierten Bitstroms (127), umfassend einen codierten Basisschicht- (BL) Strom (132), der unter Verwendung von Gamma-Codierung codiert wurde, zur Darstellung in einem Standard-Dynamikbereich (SDR), einen codierten Erweiterungsschicht- (EL) Strom (134), der in wahrnehmbarer Quantisierungs- (PQ) Codierung codiert wurde, zur Darstellung in einem hohen Dynamikbereich (HDR), und einen Zwischenschicht-Prädiktionseinheit-Datenstrom (136), der Verarbeitungsparameter der Zwischenschicht-Prädiktionseinheit umfasst, die Sample-Adaptive-Offset- (SAO) Parameter umfassen;
Decodieren des codierten BL-Stroms (132) unter Verwendung eines BL-Decoders (140), um ein decodiertes BL-Signal (142) zu erzeugen;
Decodieren des Zwischenschicht-Prädiktionseinheit-Datenstroms (136), um Verarbeitungsparameter der Zwischenschicht-Prädiktionseinheit zu bestimmen;
als Reaktion auf ein Bestimmen, dass die Verarbeitungsparameter der Zwischenschicht-Prädiktionseinheit ein Bildzuschneidemerkmal umfassen, wobei das Bildzuschneidemerkmal angibt, dass Offset-Zuschneideparameter in den Verarbeitungsparametern der Zwischenschicht-Prädiktionseinheit vorhanden sind:
Zugreifen auf ein Basisschicht-Bild in dem decodierten BL-Signal;
Zugreifen auf die Offset-Zuschneideparameter;
Erzeugen eines Referenzbildes für die Erweiterungsschicht durch Zuschneiden eines rechteckigen Bereichs des Basisschicht-Bildes gemäß den Offset-Zuschneideparametern, wobei ein Erzeugen des Referenzbildes für die Erweiterungsschicht ferner umfasst:
Anwenden von Gamma-Decodierung und SDR-zu-wahrnehmbarer-HDR-Quantisierung gemäß den empfangenen Verarbeitungsparametern der Zwischenschicht-Prädiktionseinheit; und
Anwenden eines SAO-Prozesses, der dem HEVC-Standard entspricht, gemäß den empfangenen SAO-Parametern;
Decodieren des codierten EL-Stroms (134) unter Verwendung eines EL-Decoders (150), um ein decodiertes EL-Signal (144) zu erzeugen, wobei der codierte EL-Strom (134) dem HEVC-Standard entspricht, wobei das Decodieren des EL-Stroms (134) zumindest teilweise auf dem Referenzbild für die Erweiterungsschicht basiert.

2. Verfahren nach Anspruch 1, wobei der BL-Strom (132) und der EL-Strom (134) zumindest eines von unterschiedlicher räumlicher Auflösung oder unterschiedlichen Bild-Seitenverhältnissen aufweisen.

3. Verfahren nach Anspruch 1 oder 2, wobei die Verarbeitungsparameter der Zwischenschicht-Prädiktionseinheit Parameter umfassen, die sich auf In-Loop-Entblockungsfilterung beziehen, und wobei ein Erzeugen des Referenzbildes für die Erweiterungsschicht gemäß den Parametern, die sich auf In-Loop-Entblockungsfilterung beziehen, ferner umfasst:
Auswählen einer Entblockungsfilterstärke aus mehreren Filterstärken und Anwenden eines In-Loop-Entblockungsfilters mit der Entblockungsfilterstärke.

4. Verfahren nach einem der vorstehenden Ansprüche,
wobei sich das Basisschicht-Bild in einer ersten räumlichen Auflösung befindet, und
wobei ein Erzeugen des Referenzbildes ein Skalieren des zugeschnittenen rechteckigen Bereichs von der ersten räumlichen Auflösung auf eine zweite räumliche Auflösung umfasst, sodass sich das Referenzbild in der zweiten räumlichen Auflösung befindet.

5. Verfahren nach einem der vorstehenden Ansprüche, wobei die Offset-Zuschneideparameter in dem codierten Bitstrom auf einer Einzelbildbasis aktualisiert werden.

6. Verfahren nach einem der vorstehenden Ansprüche, ferner umfassend ein Erkennen, dass das Bildzuschneidemerkmal auf einen vorbestimmten Wert gesetzt ist.

7. Verfahren nach Anspruch 6, wobei der vorbestimmte Wert 1 ist.

8. Verfahren nach einem der vorstehenden Ansprüche, wobei die Offset-Zuschneideparameter einen linken Offset, einen rechten Offset, einen oberen Offset und einen unteren Offset umfassen.

9. Decoder zum Decodieren eines geschichteten Videostroms (127), umfassend:
einen oder mehrere Prozessoren, die dazu eingerichtet sind, das Verfahren nach einem der vorstehenden Ansprüche zu verarbeiten.

10. Computerlesbares Medium, das mit einem oder mehreren Prozessoren gekoppelt ist, das darauf gespeicherte Anweisungen aufweist, die, wenn sie von dem einen oder den mehreren Prozessoren ausgeführt werden, den einen oder die mehreren Prozessoren veranlassen, das Verfahren nach einem der Ansprüche 1-8 durchzuführen.

## Revendications

1. Procédé pour décoder un flux vidéo en couches (127) par un décodeur, le procédé comprenant :
la réception d'un train de bits codé (127) comprenant un flux de couches de base - BL - codé (132) codé en utilisant un codage gamma pour une représentation dans une plage dynamique standard - SDR -, un flux de couches d'amélioration - EL - codé (134) codé en codage par quantification perceptuelle - PQ - pour une représentation dans une grande gamme dynamique - HDR -, un flux de données d'unité de prédiction intercouches (136) comprenant des paramètres de traitement d'unité de prédiction intercouches comprenant des paramètres de décalage adaptatif d'échantillon - SAO - ;
le décodage du flux de BL codé (132) en utilisant un décodeur de BL (140) pour générer un signal de BL décodé (142) ;
le décodage du flux de données d'unité de prédiction intercouches (136) pour déterminer les paramètres de traitement d'unité de prédiction intercouches ;
en réponse à la détermination que les paramètres de traitement d'unité de prédiction intercouches comprennent une bannière de recadrage d'image, la bannière de recadrage d'image indiquant que des paramètres de recadrage décalé sont présents dans les paramètres de traitement d'unité de prédiction intercouches :
l'accès à une image de couche de base dans le signal de BL décodé ;
l'accès aux paramètres de recadrage décalé ;
la génération d'une image de référence pour la couche d'amélioration en recadrant une région rectangulaire de l'image de couche de base en fonction des paramètres de recadrage décalé, dans lequel la génération d'une image de référence pour la couche d'amélioration comprend en outre :
l'application d'un décodage gamma et d'une quantification perceptuelle SDR à HDR en fonction des paramètres de traitement d'unité de prédiction intercouches reçus ; et
l'application d'un procédé de SAO conforme à la norme HEVC en fonction des paramètres de SAO reçus ;
le décodage du flux d'EL codé (134) en utilisant un décodeur d'EL (150) pour générer un signal d'EL décodé (144), dans lequel le flux d'EL codé (134) est conforme à la norme HEVC, le décodage du flux d'EL (134) étant basé au moins en partie sur l'image de référence pour la couche d'amélioration.

2. Procédé selon la revendication 1, dans lequel le flux de BL (132) et le flux d'EL (134) présentent au moins un parmi une résolution spatiale différente ou des rapports d'aspect d'image différents.

3. Procédé selon la revendication 1 ou 2, dans lequel les paramètres de traitement d'unité de prédiction intercouches comprennent des paramètres liés à un filtrage de déblocage en boucle et la génération de l'image de référence pour la couche d'amélioration comprend en outre, en fonction des paramètres liés à un filtrage de déblocage en boucle :
la sélection d'une intensité de filtre de déblocage parmi diverses intensités de filtre, et l'application d'un filtre de déblocage en boucle avec l'intensité de filtre de déblocage.

4. Procédé selon une quelconque revendication précédente,
dans lequel l'image de couche de base est dans une première résolution spatiale, et
dans lequel la génération de l'image de référence comprend la mise à l'échelle de la région rectangulaire recadrée entre la première résolution spatiale et une seconde résolution spatiale de telle sorte que l'image de référence est dans la seconde résolution spatiale.

5. Procédé selon une quelconque revendication précédente, dans lequel les paramètres de recadrage décalé sont mis à jour trame par trame dans le train de bits codé.

6. Procédé selon une quelconque revendication précédente, comprenant en outre la détection que la bannière de recadrage d'image est réglée sur une valeur prédéterminée.

7. Procédé selon la revendication 6 dans lequel la valeur prédéterminée est de 1.

8. Procédé selon une quelconque revendication précédente, dans lequel les paramètres de recadrage décalé comprennent un décalage à gauche, un décalage à droite, un décalage vers le haut et un décalage vers le bas.

9. Décodeur pour décoder un flux vidéo en couches (127), comprenant :
un ou plusieurs processeurs configurés pour exécuter le procédé selon une quelconque revendication précédente.

10. Support lisible par ordinateur accouplé à un ou plusieurs processeurs dans lesquels des instructions sont stockées, qui, lorsqu'elles sont exécutées par les un ou plusieurs processeurs, amènent les un ou plusieurs processeurs à exécuter le procédé selon l'une quelconque des revendications 1-8.
